# EUROPEAN PATENT APPLICATION

(11) **EP 4 841 310 A1**
(43) Date of publication of application: **18.11.2026**
(21) Application number: 25209561.7
(22) Date of filing: 17.10.2025
(51) Int. Cl.: G01V 1/30, G06N 3/045, G06N 3/08

(54) **QUANTITATIVE SUBSURFACE CHARACTERIZATION METHOD AND SYSTEM USING MULTI-SCALE NEURAL NETWORK ARRAY**

(30) Priority: 16.05.2025 US 202563806785 P
(71) Applicant: CGG Services SAS, 91300 Massy (FR)
(72) Inventor: ALLO, Fabien, 91300 MASSY (FR)
(74) Representative: Ipsilon

(57) **Abstract**

A method (600) for quantitative subsurface characterization of geological features of a surveyed subsurface includes receiving (602) input data (406) associated with the geological features; decomposing (604) the input data (406) into plural scale-dependent data components (410), each one being associated with a unique scale, wherein the scale is associated with a frequency content or a spatial resolution; applying (608) an array (402) of machine learning (ML) models (404) to the plural scale-dependent data components (410) so that each ML model receives as input a set of scale-dependent data components for a specific scale out of the plural scale-dependent data components (410), to generate plural scale-dependent output data (412) at that specific scale; recomposing (614) the plural scale-dependent output data (412) at the specific scale to obtain target data (414) characteristic of the geological features; and displaying (616) the geological features based on the target data (414).

## Description

### BACKGROUND OF THE INVENTION

### TECHNICAL FIELD

Embodiments of the subject matter disclosed herein generally relate to a system and method for processing one or more types of recorded data for extracting information related to one or more formations (e.g., geological feature) in the subsurface using neural networks, and more particularly, to using an array of neural networks with each neural network trained for a given scale of the recorded data.

### DISCUSSION OF THE BACKGROUND

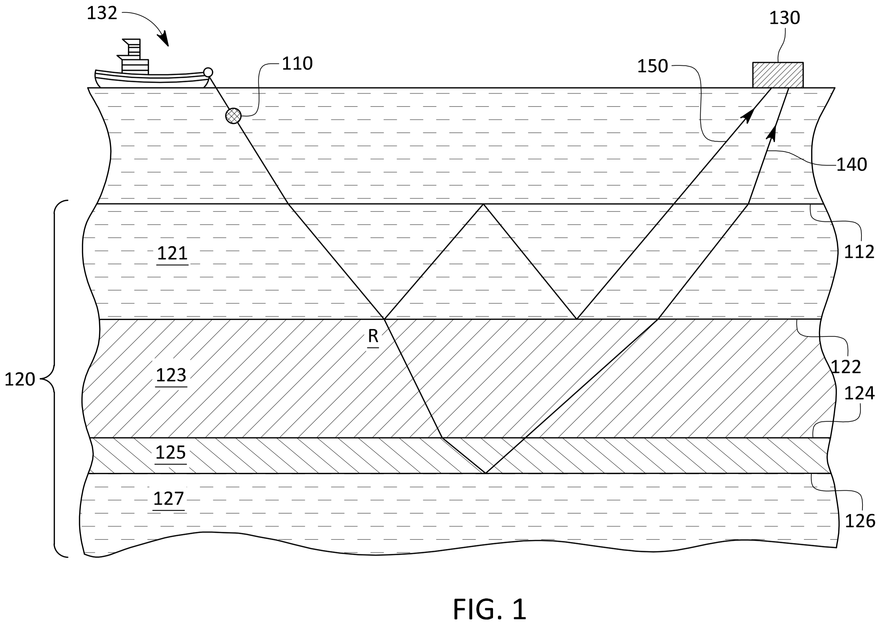

Hydrocarbon exploration and development uses waves (e.g., seismic waves or electromagnetic waves or gravitational waves) to explore the structure of underground formations on land and/or at sea (i.e., formations under the seafloor). As schematically illustrated in FIG. 1, a marine acquisition system (the description of a land based acquisition system follows the same principles) includes a source 110 and at least one sensor 130. Waves emitted by the source 110 at a known location penetrate an explored subsurface 120 and are reflected, refracted, or diffracted at interfaces 112, 122, 124, and 126 that separate subsurface formations 121, 123, 125, and 127 with distinct rock and elastic properties. Sensors 130 (only one is shown for simplicity), which may be towed by a vessel 132 on streamers (not shown), or may be independently placed in the water or ocean bottom (not shown), detect the waves and record one or more of their characteristics, for example, pressure, one-dimensional displacement, three-dimensional displacement, speed, acceleration, etc. Note that, as used herein, the term "formation" refers to any geophysical structure into which source energy is injected to perform geophysical surveying, e.g., land, ocean bottom, transition zone, or marine based. This means that the configuration shown in FIG. 1 may also be used on land, in which case the source 110 is carried by a truck or other means, from one point to another, and the sensors 130 are located on the surface, or buried in the subsurface. Note that the sensors 130 are known in the art and they can include hydrophones, accelerometers, geophones, gravitational sensors, electromagnetic sensors, etc.

Various geological features (also called "geobodies" such as channelized deposits, carbonate buildups, turbidite fans etc.) may be present in the subsurface 120 and the target of the seismic data processing is to determine the location, boundaries, and/or composition of these bodies. For example, geobodies such as channels and fans can be indicative of an oil and gas reservoir. Differences of elastic properties between such geobodies and surrounding subsurface rock formations can affect the behavior of seismic waves as they propagate through the Earth. Geobodies have significant implications for oil and gas exploration and production because they can act as reservoirs for hydrocarbons and rock properties (porosity, permeability etc.) within the geobodies control fluid flow within these reservoirs.

When seismic waves encounter a geobody during seismic data acquisition, they may reflect, refract, or diffract, leading to changes in the seismic data recorded at the surface or downhole. These changes can manifest as amplitude anomalies, time delays, or other seismic signatures that indicate the presence of a geobody. Geologists use seismic data analysis techniques, such as seismic interpretation and seismic attribute analysis, to identify and characterize geobodies in subsurface reservoirs. Understanding the location, boundaries, and composition of geobodies is important for accurately mapping and modeling subsurface structures, predicting reservoir behavior, and optimizing drilling and production strategies in oil and gas exploration and production operations.

In order to understand the structure of the explored underground formation or geological bodies (e.g., layers 121, 123, 125, and 127 and interfaces 112, 122, 124, and 126 in the specific example of FIG. 1), various steps are performed on the recorded data "*d*" recorded by sensors 130, as part of the processing (e.g., migration, stacking, full waveform inversion) of the recorded seismic data. Note that the recorded data "d" may be seismic data, electromagnetic data, etc. In the past, these steps, although performed on a computer, required full involvement of the geologist/geophysicist. However, more recently, machine learning (ML) algorithms were implemented to analyze the recorded data, which require less involvement from a geologist/geophysicist.

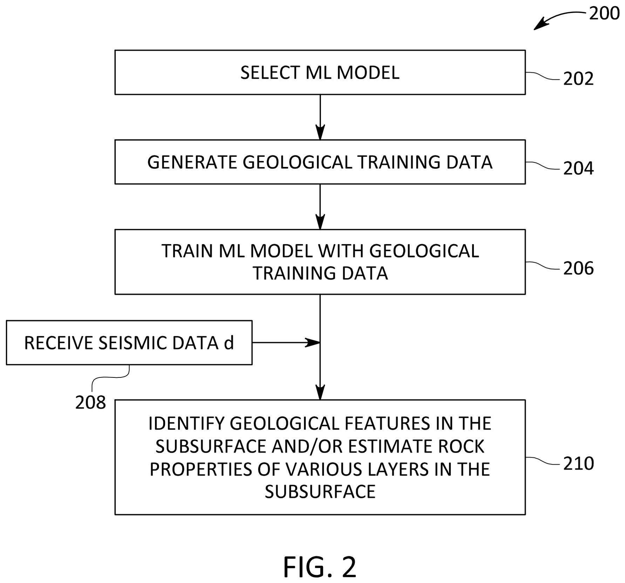

More specifically, as illustrated in FIG. 2, an ML-based workflow 200 for estimating rock properties of subsurface formations starts in step 202 with selecting the ML model, for example, a deep learning model. A deep learning model may be a convolutional neural network (CNN) for image processing. As the CNN is typically not trained for estimating rock properties, geological training data is generated in step 204 followed by a training step 206. These steps require a large amount of the geologist's time as samples of known (labeled) geological features need to be fed to the CNN. After the CNN is trained, the recorded data "d" for a region of interest is received in step 208 and input to the trained CNN. The trained CNN produces in step 210 estimates of rock properties of various layers in the subsurface that help identify various geological features.

However, this CNN-based method still makes the imaging and interpretation a challenging task. Such a traditional workflow for interpreting geobodies requires a time-consuming collaborative effort between skilled geophysicists and geologists for the training step 206. Training a generalized CNN model requires a large number of high-quality labels to be generated in step 204. It is time-consuming to manually pick accurate labels for the geobodies of interest. Lack of training data is a common challenge in developing deep learning models in the geological domain. This is because it is often expensive and time-consuming to acquire such data. Therefore, the entire process can still take weeks or even months, depending on the size of the area of interest.

Thus, there is a need for a new ML workflow to detect geobodies of interest from geophysical data and to overcome the above noted problems.

### SUMMARY OF THE INVENTION

According to an embodiment, there is a method for quantitative subsurface characterization of geological features of a surveyed subsurface. The method includes receiving input data associated with the geological features, decomposing the input data into plural scale-dependent data components, each one being associated with a unique scale, wherein the scale is associated with a frequency content or a spatial resolution, applying an array of machine learning (ML) models to the plural scale-dependent data components so that each ML model receives as input a set of scale-dependent data components for a specific scale out of the plural scale-dependent data components, to generate plural scale-dependent output data at that specific scale, recomposing the plural scale-dependent output data at the specific scale to obtain target data characteristic of the geological features, and displaying the geological features based on the target data.

According to another embodiment, there is a computing device for quantitative subsurface characterization of geological features of a surveyed subsurface. The computing device includes an input/output interface for receiving input data associated with the geological features and a processor connected to the input/output interface. The processor is configured to decompose the input data into plural scale-dependent data components, each one being associated with a unique scale, wherein the scale is associated with a frequency content or a spatial resolution, apply an array of machine learning (ML) models to the plural scale-dependent data components so that each ML model receives as input a set of scale-dependent data components for a specific scale out of the plural scale-dependent data components, to generate plural scale-dependent output data, recompose the plural scale-dependent output data to obtain target data characteristic of the geological features, and display the geological features based on the target data.

According to yet another embodiment, there is a method for training an array of machine learning (ML) models for quantitative subsurface characterization of geological features of a surveyed subsurface. The method includes receiving input data associated with the geological features, decomposing the input data into plural scale-dependent data components, each one being associated with a unique scale, wherein the scale is associated with a frequency content or a spatial resolution, applying an array of machine learning (ML) models to the plural scale-dependent data components so that each ML model receives as input a set of scale-dependent data components at a specific scale out of the plural scale-dependent data components, to generate plural scale-dependent output data, receiving target data describing the geological features, scale decomposing the target data into plural scale-dependent target data components, each one being associated with a unique scale, and adjusting one or more features of the ML models based on a minimizing a difference between the plural scale-dependent output data and the plural scale-dependent target data components.

### BRIEF DESCRIPTION OF THE DRAWINGS

For a more complete understanding of the present invention, reference is now made to the following descriptions taken in conjunction with the accompanying drawings, in which:
FIG. 1 is a schematic diagram of a marine based seismic acquisition system;
FIG. 2 is a schematic flow chart of a method that uses ML for learning geological features in seismic data and then the trained ML is used on new seismic data for delineating similar geophysical features and/or estimating rock properties of various layers in the subsurface;
FIG. 3A illustrates a geophysical data set corresponding to a subsurface, and FIGs. 3B to 3D show the same geophysical data decomposed into different scales (frequency bands in this case);
FIG. 4 schematically illustrates a training process for a computing system that uses an array of ML models for individually processing geophysical data at the different scales;
FIG. 5 schematically illustrates the computing system that uses the array of trained ML models for individually processing geophysical data at the different scales;
FIG. 6 is a flowchart of a method for estimating rock properties from the geophysical data using the array of ML models;
FIG. 7 is a flowchart of a method for training the array of ML models of FIG. 6;
FIG. 8 is an example of applying the array of ML models of FIG. 4 according to the method of FIG. 6; and
FIG. 9 is a schematic diagram of a computing device that implements the methods discussed in this document.

### DETAILED DESCRIPTION OF THE INVENTION

The following description of the embodiments refers to the accompanying drawings. The same reference numbers in different drawings identify the same or similar elements. The following detailed description does not limit the invention. Instead, the scope of the invention is defined by the appended claims. The following embodiments are discussed with regard to one or more neural network models for determining rock properties in a subsurface, using terminology of seismic data processing. However, the embodiments to be discussed next are not limited to neural network models and/or seismic data, but may be applied to other types of machine learning models (for example, decision trees, support vector machines, and k-means clustering) or data (for example, electromagnetic wave data or gravimetry data).

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an embodiment, a system and method employ plural ML models (an array of ML models) for the evaluation of rock properties from geophysical data, significantly reducing the need for extensive human intervention. Instead of feeding each ML model the same input data, the input data is decomposed (scale decomposition) into data at different scales (e.g., spatial resolution and/or frequency content). Each ML model is uniquely associated with data corresponding to a specific scale, so that two ML models do not receive the same data. Each ML model is trained with data corresponding to a specific scale and is configured to generate an estimate of the subsurface rock properties of interest for the corresponding scale. The outputs from the plural ML models are then combined (scale recomposition) to obtain a final estimate (sometimes an image indicative of the rock properties), which includes information from all the scales.

As discussed above, the characterization of subsurface properties, such as rock composition, textural properties, or elastic properties, is a foundational aspect of geophysical exploration and reservoir management. Geophysical data, including seismic, gravity, and electromagnetic data, provide indirect measurements of the subsurface. Various techniques are employed to derive quantitative estimates of subsurface properties from this geophysical data.

ML models, particularly neural networks, are frequently utilized to establish relationships between geophysical data inputs and target subsurface properties. In many conventional approaches, a single neural network architecture is trained to predict a specific subsurface property. These models may use a single type of geophysical data as input or attempt to integrate multiple types of geophysical data, such as seismic amplitudes and electrical resistivity, to leverage the complementary nature of different datasets.

For example, Ross addresses the challenge of seismically resolving thin, tight siltstone reservoirs in the Permian Basin, where traditional seismic inversion techniques have limitations. This paper demonstrates how supervised neural networks can be used for mapping and classifying these lithologies to enhance the resolution and clarity of seismic data. The goal is to create a more accurate model of these challenging reservoirs to aid in exploration and production.

To achieve this, the author compares a conventional full waveform inversion (FWI) with two supervised neural network approaches. The first, a probabilistic neural network (PNN) inversion, produced a result that more accurately matched well log data than the FWI. The second approach used a supervised multilayer perceptron (MLP) neural network to classify the data into distinct seismic facies. This classification method successfully accounted for the variability of acoustic impedance within the different rock types. The paper concludes that non-linear neural network approaches can significantly improve upon standard inversion results, providing a clearer depiction of reservoir properties and helping to guide exploration and development decisions.

Allo describes a process for characterizing a carbonate geothermal reservoir where deep neural networks are guided by rock-physics models. This approach uses neural networks to determine subsurface properties from geophysical data. In their implementation, a single network is trained to predict properties such as porosity and fluid saturation from seismic data inputs. This technique is designed to integrate geological and petrophysical knowledge into the neural network training process to constrain the model and provide more geologically plausible results.

Furthermore, Colombo proposed a hybrid workflow that combines deep-learning inversion with a physics-driven, least-squares optimization method. In this scheme, predictions from a deep-learning network are used as constraints for a conventional inversion process. The results from the physics-based inversion are then used to retrain the network. This iterative, self-feeding process is designed to converge to a common solution that benefits from both the data-driven relationships established by the network and the physical principles enforced by the conventional inversion, aiming to bring the solution closer to a global minimum.

Sun describes a method for seismic inversion that leverages a physics-guided deep learning approach, integrating both data-driven and physics-based models for enhanced prediction and uncertainty analysis. Their technique utilizes deep neural networks, with architectural configurations that incorporate physical constraints derived from seismic wave propagation theory. The system combines supervised learning with physics-informed regularization to improve the accuracy and geological plausibility of the inverted subsurface properties.

U.S. Patent no. 11,860,325 describes a system for estimating subsurface rock properties using a multi-head Convolutional Neural Network (CNN) model. This system improves the characterization of subsurface properties in areas lacking direct well control. Each head within the multi-head CNN model functions as an input channel, designed to process the same input data but to interpret it at a specific resolution. This is achieved by employing a plurality of kernels, each head having a kernel of a different size in a one-dimensional (1D) convolution layer. For instance, the multi-head CNN model may include multiple heads (e.g., Head 1 through Head 5), where each head employs a convolution kernel of a distinct size (e.g., 0.95L, 0.75L, 0.625L, 0.5L, and 0.25L, where L is the average number of samples in the input traces).

All heads simultaneously receive the same input seismic data. Larger kernels may capture broader, lower-frequency spatial and temporal relationships, while smaller kernels may discern finer, higher-frequency details. The outputs from these individual heads are subsequently concatenated and passed through further layers of the CNN model, leading to the prediction of a subsurface rock property value. This multi-head architecture allows the model to process and integrate information across a spectrum of resolutions from a single data input, addressing the challenge of varying characteristics in geophysical data.

Furthermore, Vashisth describes a method for the direct estimation of subsurface properties, such as porosity, from seismic data. Their approach integrates principles from rock physics and wave physics directly into the structure and training process of a neural network. This physics-informed neural network is designed to establish a relationship between seismic data inputs and the desired subsurface property, aiming to produce results that are both data-driven and consistent with established physical models.

Li developed a probabilistic approach for seismic petrophysical inversion using a physics-informed neural network (PINN). The technique is designed to address the non-unique and often non-linear relationship between seismic data and petrophysical properties like porosity. Their method establishes relations between seismic data and unknown variables from a training dataset, leveraging a PINN within a probabilistic framework. This framework includes an inverse network to estimate model variables, a reparameterization network to estimate unknown hyperparameters within rock-physics models, and a forward model to integrate physical constraints into the network. This approach uses approximate Bayesian computation to quantify model uncertainty. The system predicts the most likely model of petrophysical properties from input seismic data and provides an uncertainty assessment for these predictions. This method can also simultaneously estimate unknown rock-physics model hyperparameters, such as critical porosity or coordination number.

Other approaches combine different types of geophysical data to leverage the strengths of each. For example, Liu (2022) describes a methodology that employs a physics-informed deep learning model for the joint inversion of multiple geophysical datasets. This technique is applied to monitor geologic carbon sequestration, where changes in subsurface properties are estimated from complementary data types. The framework is designed to integrate the physical relationships governing the data into the neural network, thereby constraining the inversion process to produce results that are consistent with known physical principles.

However, a common problem for all the above noted approaches is that different types of geophysical data possess intrinsically different characteristics. For example, seismic data may offer a certain spatial resolution and frequency content, while gravity or electromagnetic data may provide information at a different scale. When multiple data types with varying resolutions and frequency contents are fed into a single, monolithic neural network (as in the papers and examples discussed above), the network's internal parameters, such as the number of layers, nodes, or kernel sizes, represent a compromise. Such a configuration attempts to simultaneously process information across all scales present in the input data. This can lead to a trade-off in the network's parameterization, potentially resulting in suboptimal predictive capabilities as the network architecture is not specifically adapted to the distinct characteristics of the data at each scale.

Jo et al. show the benefit of using multiscale seismic data for porosity estimation. Jo et al. generate synthetic seismic data with wavelets of different dominant frequency to simulate seismic data with various frequency bands. Then, Jo et al. compare the output of networks that are fed either a single frequency band input or all of them. Results show that feeding all frequency band inputs provides a more accurate porosity estimate. But the use of synthetic seismic data by Jo et al. is not really representative of field data which are full-band geophysical measurements with different bandwidths depending on the type of data, acquisition set-up, etc. To handle such varied input data, the inventor has discovered that pre-processing techniques such as spectral decomposition and/or wavelet transforms can be applied to separate the data into various scales to produce sets of scale-dependent components that can be fed to neural networks

Furthermore, in their experiment Jo et al. fed all scale-dependent input data to a single neural network. This can cause issues in the optimization of the network's structure for the unique patterns and relationships that may exist independently within each distinct scale. Thus, the inventor has discovered that the different scales of information present in the input data may be fed to corresponding ML models, so that for each ML model, the model's internal parameters (the number of layers, nodes, or kernel sizes) are optimized for a specific scale, and not for the entire scale of information. In this way, the output of each ML model is not affected by the other scales. The output of all the ML models (that form an array of neural network models) is then recombined (using scale recomposition, which is discussed later in more detail) to obtain an image of the subsurface that displays the desired feature (e.g., rock composition, rock textural properties, rock type, elastic properties, geomechanical properties, etc.)

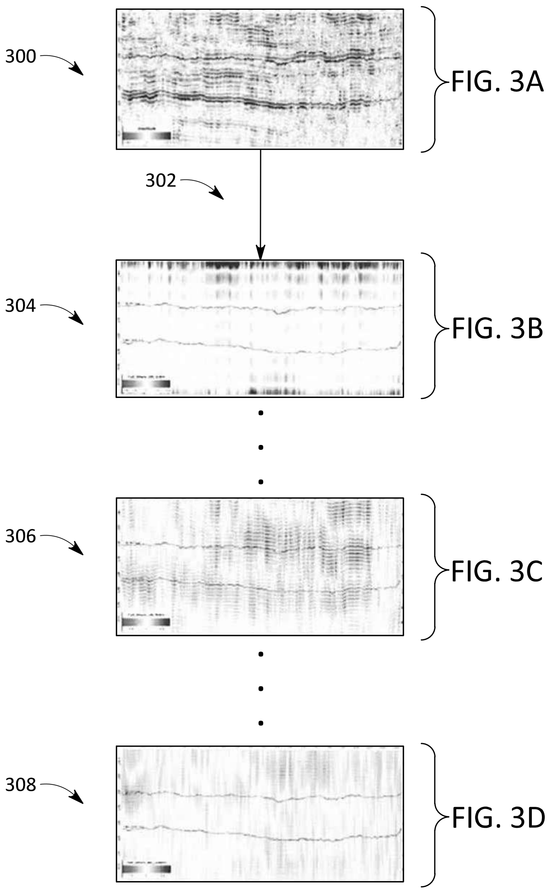

The above concepts are now discussed in more detail with regard to the figures. The geophysical data (corresponding to the recorded data discussed in the Background section) have different intrinsic spatial resolution and/or frequency content. For example, consider that the geophysical data in this embodiment is seismic data, e.g., data recorded with streamers towed by a vessel as illustrated in FIG. 1. The acquired seismic data 300 (see FIG. 3A) includes seismic amplitudes organized as traces. The seismic data 300 may be split into various frequency bands to better analyze subsurface geology. This process, known as "frequency decomposition" or "spectral decomposition," isolates different frequency components within a single seismic signal. This process may be described like using a prism to split white light into a rainbow of individual colors; frequency decomposition uses mathematical tools, such as the Fourier transform 302, to split a complex broadband seismic signal (e.g., 1-100 Hz) set 300 into a series of new datasets 304 to 308, each corresponding to a specific frequency range (e.g., set 304 corresponds to 1-20 Hz, set 306 corresponds to 20-50 Hz, and set 308 corresponds to 50 to 100 Hz). One skilled in the art would understand that these ranges and the number of ranges may be changed as desired.

Analyzing seismic data in discrete frequency bands is valuable because different frequencies reveal different aspects of the subsurface. By examining these separate "views," geoscientists can enhance features that might be obscured in the original broadband data, improving the overall resolution and clarity of the interpretation. In this context, the low frequency band (e.g., 1-20 Hz) has long wavelengths and high energy. The waves in this band can travel deeper into the earth with less energy loss (attenuation). While they offer lower spatial resolution, they are excellent for imaging large-scale structural features and the overall architecture of a basin. The mid-range frequency band (e.g., 20-50 Hz) often provides a good balance between penetration depth and resolution, making it useful for general interpretation of sedimentary layers and structural elements. The high frequency band (e.g., 50-100 Hz) has short wavelengths and provides the highest resolution. These waves are necessary for identifying fine details such as thin beds, subtle faults, and small stratigraphic traps. However, high-frequency energy attenuates more quickly with depth, so its usefulness can be limited in deeper targets.

While the above example was directed to frequency bands for the geophysical data, a similar approach may be used for separating the input geophysical data based on spatial resolution. While a seismic dataset has an inherent maximum resolution, geoscientists analyze it at various spatial scales, much like using different zoom levels on a map. This allows for a comprehensive understanding, from the vast regional geology down to the fine details of a specific reservoir target.

Spatial resolution in geophysics refers to the ability to distinguish two separate objects or geological features. Viewing the same data at different scales helps interpreters identify features that are only apparent from a certain perspective. Analyzing these different views is crucial for building a complete geological model.

For example, a coarse scale (e.g., about 500 m) corresponds to a "zoomed-out," regional view. At this scale, fine details are invisible, but this scale is appropriate for identifying large-scale features that define the geological setting. This includes entire sedimentary basins, major fault systems that span kilometers, large salt structures, and regional unconformities. This view provides the foundational understanding of the area's tectonic and depositional history.

The intermediate scale (e.g., about 20 m) corresponds to a "field-scale" view, focused on an area relevant for exploration or development. At this resolution, interpreters can delineate the overall geometry of a specific reservoir, map out channel systems and fan complexes, and identify the network of faults that may divide a field into separate blocks. This is the primary scale for planning well paths and understanding the overall structure of a hydrocarbon trap.

The fine scale (e.g., about 1 m) corresponds to the highly detailed, "zoomed-in" view essential for characterizing the reservoir itself. The ability to resolve features at this scale is a key challenge, especially for thin reservoirs. Achieving this high resolution allows interpreters to identify individual thin beds, small faults or fractures within the reservoir, and subtle stratigraphic changes that control fluid flow. Improving resolution to this level is a primary goal of advanced techniques, like the neural network methods, to better determine the thickness and extent of reservoir units.

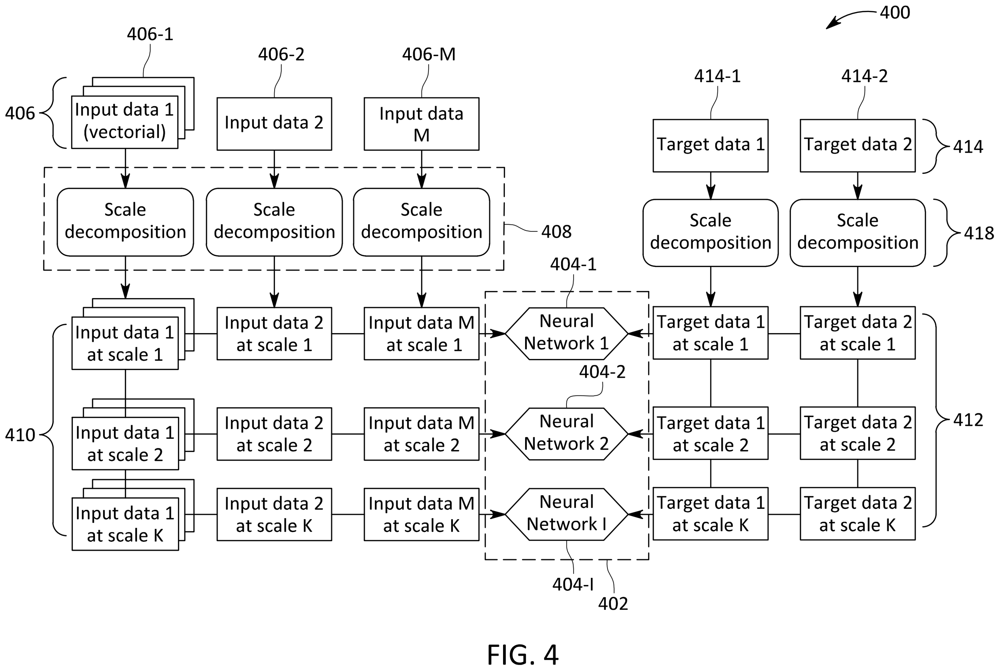

By tuning into specific frequency bands and/or spatial resolutions, an interpreter can more clearly identify geological features, such as the thickness and extent of a thin reservoir, that are difficult to resolve in the full-band record. Thus, according to an embodiment, an array of ML models is selected so that each model is uniquely associated with a single frequency band and/or spatial resolution (called herein a "scale"). FIG. 4 schematically illustrates the logical configuration of a computing system 400 that uses an array 402 of ML models (neural networks in this embodiment) 404-I, where I is an integer of at least 2. The system 400 is configured to receive at least M data inputs 406-1 to 406-M, where M is an integer of at least 1. In one embodiment, M is about 10. In yet another embodiment, M is between 1 and 10.

In one embodiment, each data input 406-M is associated with a different type of geological data 406. For example, input data 406-1 may be related to seismic amplitudes: full stack, partial stacks, pre-stack gathers, etc. Another input data 406-2 may be associated with one or more seismic attributes computed based on the input data 406-1, e.g., derivative, quadrature, instantaneous phase, intercept, gradient, etc. Yet another input data may be related to seismic velocities: root mean square (RMS) velocity, interval velocity, FWI velocity model, etc. Another input data may be related to density from gravity data. Another input data may be related to resistivity from electric or electro-magnetic data (CSEM, TEM, MT, etc.). Yet another may be related to magnetic susceptibility. As noted above, one or more of these types of data may be used as input data to the computing system 400. In one embodiment, all this data may be used as input data.

As the input geophysical data 406 has different spatial resolutions and/or frequency contents, the computing system 400 is configured with a scale decomposition module 408 for decomposing the input data 406 into corresponding resolutions and/or scales. For example, similar to scaling for differences of amplitudes between geophysical data, spectral decomposition (see Han et al.) or wavelet transforms (see Sweldens and Liu (2008)) can be used to isolate and "normalize" the resolution/frequency content present in each geophysical data 406.

Spectral decomposition of a signal involves breaking down a complex signal into its fundamental frequency components. This process is crucial in signal processing and is often achieved through techniques such as Fourier analysis. The Discrete-Time Fourier Transform (DTFT) and Discrete-Time Fourier Series (DTFS) are two common methods used to perform this decomposition. The DTFT expresses a signal as a weighted combination of exponentials, while the DTFS provides a similar representation for periodic signals or signals of finite duration. These representations allow for the analysis of the signal's frequency content, enabling the identification of periodicities and the estimation of the signal's spectral density.

The wavelet transform is another mathematical tool that analyzes a signal by breaking it down into different frequency components and then studying each component with a resolution matched to its scale. Any other mathematical tool that breaks down the input geophysical data 406 into frequency bands and/or resolutions may be used in the scale decomposition module 408 for scale decomposition.

The scale decomposition module 408 is separating the original input data 406 into scale-specific data components 410. Note that the term "scale" is used in this document to refer not only to frequency bands but also to temporal or spatial resolutions. In one embodiment, the term scale refers to both frequency bands and resolutions, i.e., the input data may be separated into data associated with specific frequency bands and spatial resolution. For example, the input data 406-1 (also called "input data 1") is separated, in this embodiment, into k different scales, input data 1 at scale 1, input data 1 at scale 2, and input data 1 at scale k. The input data 1 at scale 1 may refer to a frequency band of 1 to 20 Hz, or a resolution of about 500 m. The numbers used in this example are selected to give the reader an understanding of the process and not to limit the embodiments. Many other numbers and number ranges may be used, as decided by the operator of the computing system 400. The same is true for input data 406-2 (also called "input data 2") and input data 406-M (also called "input data M"). The number of scales is selected by the operator of the computing system 400. In this embodiment, the number of scales is 3 and the number M of different input data is also 3. However, the number k of scales may be an integer of at least 2 and the number M may be an integer of at least 1. Note that it is possible that some input data does not have components for a certain scale. That means that the input data for that scale is void. In other words, when the input data is separated into scales, there is no guarantee that there is data for each scale.

After the input data streams 406-M are separated into scales as scale-specific data components 410, the scale-specific data components 410 are fed to the array 402 of ML models 404-I. Note that each ML model 404-I, as illustrated in the figure, is configured to receive a single scale, e.g., ML model 404-1 receives only input data 1 at scale 1, input data 2 at scale 1, and input data M at scale 1. The same is true for the other ML models 404-I. Data from different scales is not mixed when fed to the ML model. This means that in this embodiment, the number of scales k is equal to the number of models I.

In this embodiment, each ML model 404-I is trained only with the corresponding scale-specific data components (from different input data M). In other words, the ML model 404-2 in this embodiment is not fed input data at scale k, with k different from 2. In this way, when the ML model is used to predict a target data, the model converges faster than the existing approaches as the model handles only the data at the corresponding scale, not the data from the other scales or the original full-band data. In other words, because each of the ML models 404-I deals only with data at a given scale, and not the data at all scales, the ML model converges quicker to a solution (i.e., finding the target data at that scale) when compared with a traditional ML model that processes the data at all scales.

About the difference between a dataset that includes all scales and the datasets at specific scales, it is noted that although these datasets refer to the same number of points (e.g., recordings at all receivers on the streamer over a given surveyed surface), the amount of information associated with each point is less for the dataset at a specific scale than the dataset that includes all scales. This means that the ML model 404-I deals with less information (although the same number of points) for convergence purposes. This advantage of the computing system 400 makes this process faster than the existing ML model analysis.

The output data 412 from the array 402 of ML models 404 is structured, as illustrated in FIG. 4. More specifically, the output data 412 includes k streams of data, each stream associated with a corresponding scale. If k streams of scale-specific data components 410 have been fed to the I ML models, where I is at least k, then k streams of output data are obtained. Considering that the operator of the computing system 400 is interested in obtaining information about L targets 414-L, with L being at least one, then the ML array 402 generates output data 412 for k scales and L targets. FIG. 4 shows L = 2 and k = 3, i.e., the ML array 402 generates target data 1 at scale 1 and target data 2 at scale 1, target data 1 at scale 2 and target data 2 at scale 2, and so on. The output data 412 from the array 402 is separated by the number of targets L and by the number of scales k.

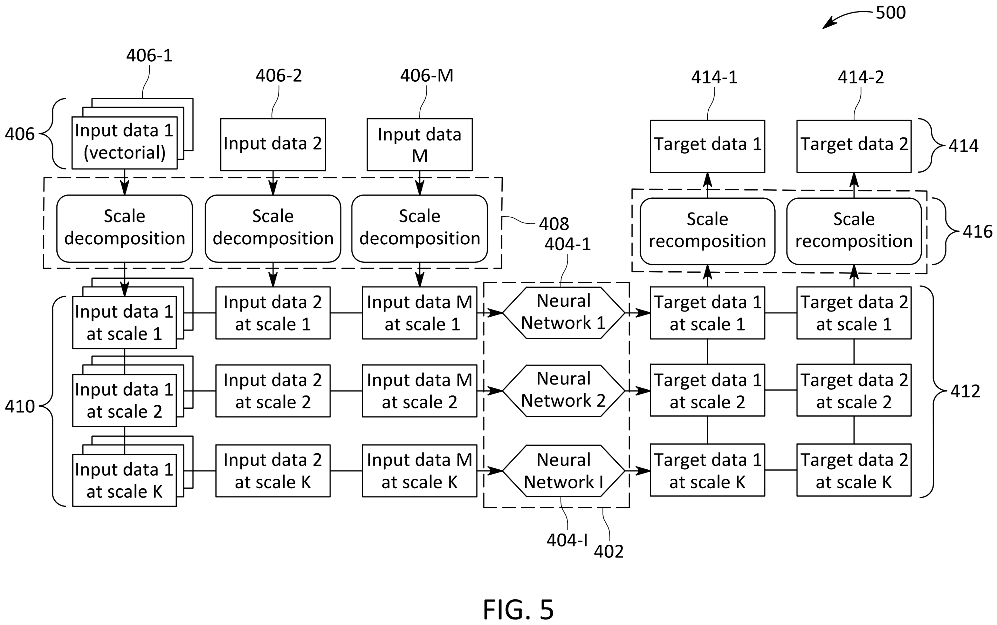

To visualize or analyze the targets associated with this data, the computing system 400 needs to combine the scale-specific target estimates (scale recomposition shown as element 416 in FIG. 5) into a recomposed target data 414. In one embodiment, the recomposed target data 414 may be information about a rock composition, e.g., mineral volumes, porosity, fluid saturations, etc. In another embodiment, the recomposed target data 414 may be rock textural properties, such as pore stiffness, crack density. In yet another embodiment, the recomposed target data 414 may be a rock type, e.g., lithofacies. In still another embodiment, the recomposed target data 414 may be related to elastic properties such as P-wave velocity, S-wave velocity, bulk density, P-wave impedance, S-wave impedance, Poisson's ratio, Vp/Vs ratio, Lambda, Young's modulus, bulk modulus, shear modulus, etc. In still another embodiment, the recomposed target data 414 may be related to geomechanical properties of the subsurface such as pore pressure, stress, unconfined compressive strength, tensile strength, etc. Note that one target data 414-1 may be any of the types noted above, and another target data 414-L may be a different one of the types noted above. In other words, two different target data streams 414-L do not have to be of the same type although that is also possible.

For obtaining a given target data stream 414-L, the target data 412 associated with that stream, for all the k scales needs to be recomposed, as illustrated in FIG. 5. Because FIG. 4 illustrates a training process of the array 402, this figure uses a scale decomposition module 418 for decomposing the target data 414 into scales, to be used for training.

The scale decomposition module 418 may be configured to implement, but is not limited to, continuous wavelet transform such as Fourier transform to generate frequency bands (by octave or constant frequency steps) and inverse Fourier transform for recomposition of full spectrum data within the scale recomposition module 416. In one embodiment, the scale decomposition module 418 is implemented with discrete wavelet transforms (and their inverse version), for example, first generation, such as the Haar wavelet, or second generation, such as adaptive directional lifting (ADL) scheme or weighted adaptive lifting (WAL) scheme. Those skilled in the art would understand that other mathematical processes may be used for decomposition or recomposition of the data.

The recomposed target data 414 may be presented to the operator of the computing device 400 as an image that shows various structural features of the subsurface.

As noted above, FIG. 4 shows that the target data 414 is decomposed into scales by a scale decomposition module 418, to obtain the plural streams of output data 412, and this data is used as ground data (or reference data) for training the array 402 of ML models. A cost (or loss) function Fk (with k indicating the scales) is defined for each ML model 404-I (note that typically I = k, but in certain cases, it is possible that I is smaller than k). The cost function Fk may be defined as a difference between the output of the ML model 404-k and the ground data (corresponding to target data 414 at scale k) and the corresponding ML model 404-k is run until this cost function is minimized or maximized. Data from other seismic surveys or synthetic data may be used for training the array 402 of ML models 404. An example of training an ML model is now provided for illustrative purposes. Those skilled in the art would understand that other ways to train an ML model may be used.

An ML model is trained to generate, for example an estimated rock property, such as an acoustic impedance value, for a formation zone located underground. Based on this estimated property, hardware processors can update a drilling program for a production system. For instance, the program could be updated with instructions to proceed with drilling in the area of interest.

The model's training is considered complete when its loss function, often measured as the mean squared error (MSE), falls below a predefined threshold. During training, the model's parameters are updated using the MSE calculated from the training set. Simultaneously, the MSE from a test (or "blind") set is monitored without being used in the optimization process to ensure the model remains unbiased. After training, the test set is used again to evaluate the model. At this stage, the test set's MSE should be equal to or slightly higher than the training set's MSE. A significant difference between the two can indicate issues with data processing or the chosen model hyperparameters. For example, a low MSE on the training set but a much higher one on the test set suggests overfitting, where the model has memorized the training data and cannot generalize to new, unseen data.

The model's predictive performance is also evaluated by calculating, for example, the Pearson correlation coefficient between the test set predictions and the actual target values. If results on the blind test set are unsatisfactory, further tuning of hyperparameters or the generation of more training examples may be necessary. Once trained, the ML model uses actual geophysical data, e.g., seismic traces, from a 3D survey as input to predict reservoir properties of the surveyed subsurface.

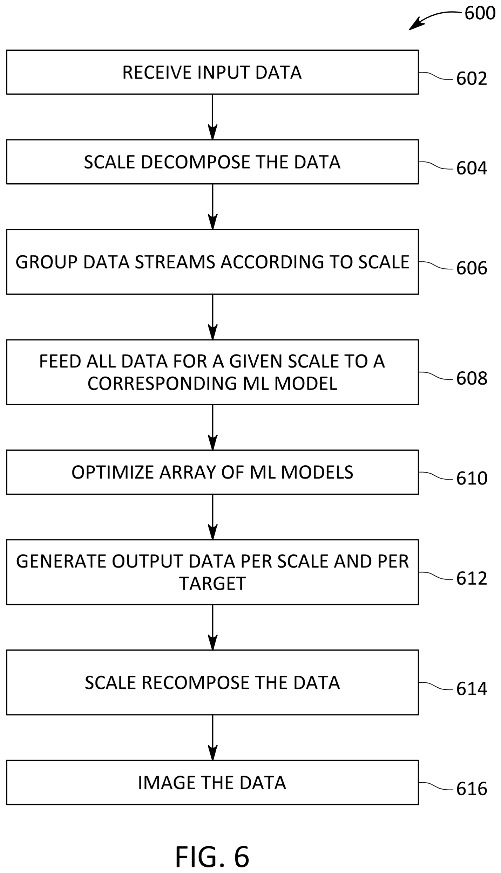

A method 600 for predicting target data 414 is now discussed with regard to FIGs. 5 and 6. The method 600 starts with receiving 602 input data 406. As discussed above, the input data 406 is recorded geological data that includes one or more streams of different types of data. These types of data have been discussed above. The input data 406 is then decomposed in step 604 in various scales to generate the scale-dependent data components 410. As the input data 406 includes one or more different stream data, each data stream is decomposed independent of the other stream. The decomposition may be based on frequency or spatial resolution. Thus, each stream of input data results in plural scale-dependent data streams 410. The method groups, in step 606, the various streams of input data with a given scale, and feeds, in step 608, all the various streams of data having the same scale to a corresponding ML model 404 of the array 402 of ML models. Note that each scale is uniquely associated with a given ML model.

In optional step 610, the array 402 of ML models 404 may be optimized in various ways. This step may be achieved in a multitude of ways, which are non-exclusive. For example, a different network architecture may be selected for each ML model, i.e., the number of layers, number of nodes, regularization, pooling, etc. In a different embodiment, different parameter values may be chosen for the various nodes and layers. These selections may be made to minimize the cost function. In one embodiment, each ML model is optimized independent of the other ML models. In yet another embodiment, it is possible to choose a different type of ML model if the current one does not produce the desired results or does not converge. For example, the method may choose one of a deep feedforward neural network, convolutional neural network, recursive neural network, generative adversarial network, Fourier neural operator, physics-informed neural network to replace the existing ML model. The same may happen for each ML model of the array 402.

Next, the array 402 of ML models 404 generates, in step 612, the output data 412 at scale. This data is per scale and per target, i.e., if there are L targets and k scales, the array 402 generates L x k streams of output data 412 at scale. Next, the method applies a step 614 of scale recomposition to the output data 412 at scale, for generating the recomposed target data 414, which is per target only. Each stream of data 414-L is for the entire scale. If the recomposed target data 414 is not an image, then step 616 images this data so that the operator can identify the geologic features of interest for the subsurface.

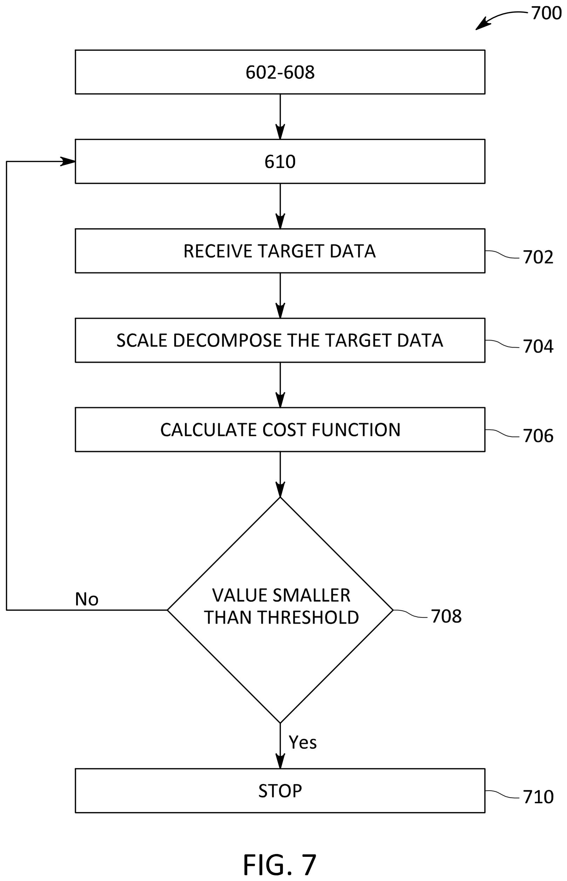

The method 600 discussed above assumes that the array 402 of ML models 404 have been previously trained based on various types of geophysical data. A method 700 for training the array 402 is now discussed with regard to FIGs. 4 and 7. The method 700 shares some steps with the method 600. Thus, the shared steps are not repeated herein. Step 610 is not optional for method 700. In fact, step 610 is required for method 700. The method 700 further includes a step 702 of receiving target data 414 associated with one or more targets. In one embodiment, this data may be obtained from a previous seismic survey of the same subsurface. In another embodiment, this data may be simulated. Other methods known in the art may be used for obtaining the target data 414.

The received target data 414 is not separated in different scales. Thus, in step 704 this data is separated into output data 412 at scale, using the scale decomposition module 418. In one embodiment, the scale decomposition module 418 is the same as the scale decomposition module 408, and the same techniques as discussed above with module 408 may be applied to module 418. A cost function, per scale, is calculated in step 706, between the data output from a corresponding ML model and the target data 412 at scale. If the value of the cost function is determined in step 708 to be smaller than a given threshold (which may depend on the type of data, the scale of the data, the depth of the target feature, the geology of the subsurface, etc.), then the method stops 710 and outputs the trained ML model (i.e., its parameters). However, if the determination in step 708 is that the value of the cost function is larger than the given threshold, the method returns to step 610 to further adjust the ML model or its parameters.

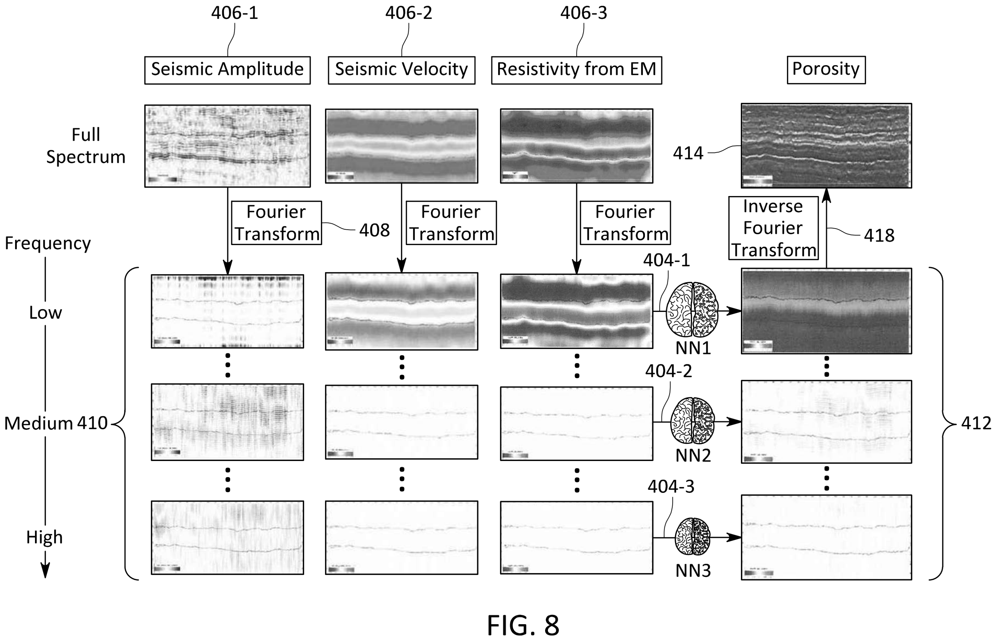

The methods 600 and 700 have been applied by the inventors to geophysical data 406 (input data) for estimating the total porosity (target data 414) of a given subsurface, as schematically illustrated in FIG. 8. The geophysical data 406 includes, in this example, seismic amplitudes 406-1, seismic velocities 406-2, and EM-derived resistivity 406-3, i.e., M = 3. Input and target training data were first spectrally decomposed using modules 408 and 418 discussed above, using, in this example, a Fourier transform.

An array 402 of neural networks 404 (in this case, each neural network 406-1 to 406-3 is a U-net, which is a type of convolutional neural network (CNN) specifically designed for fast and precise image segmentation) is then created and trained on the spectrally decomposed training data. The size of the training image and the size of the convolution kernel of each neural network 404 is adapted to each frequency band, with larger sizes for low frequency bands (to learn large scale patterns) and smaller sizes for high frequency bands (to learn small scale patterns). In this embodiment, 13 bands have been used but only three frequency bands (low, medium, and high) are shown.

The array 402 of networks 404 is then applied to a field data of interest, i.e., input data 406. The field data is first spectrally decomposed into plural (only three are shown for simplicity and these three are referred to as low, medium, and high) frequency bands in this embodiment. One skilled in the art would understand that more or less frequency bands may be used. Each network in the array is applied to the input data available in the given frequency range (note that some data may have no content in this range). The target data estimate 414 is then obtained by combining the output data 412 at scale of each network 404 through an Inverse Fourier transform (applied by the scale recomposition module 416).

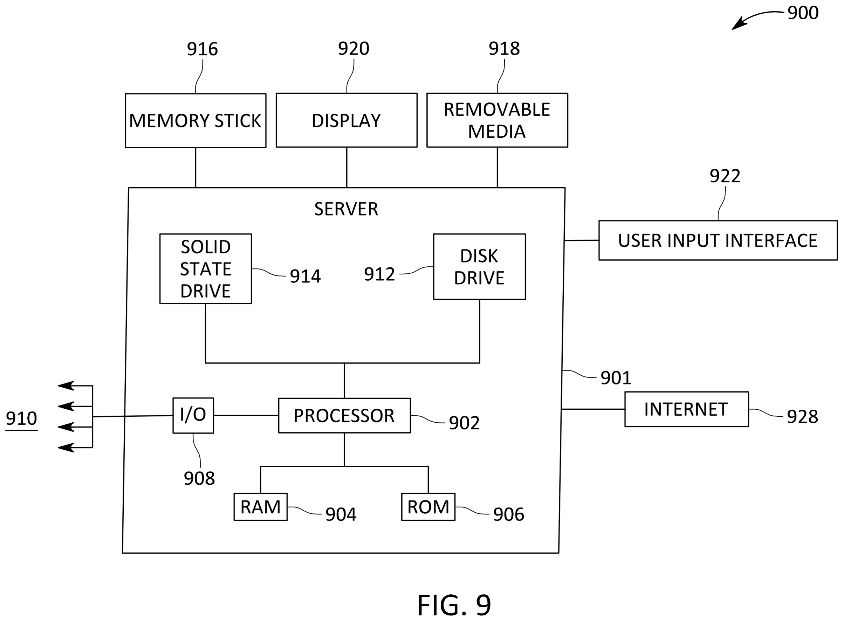

The models and methods discussed above may be implemented in a system 900 as illustrated in FIG. 9. Hardware, firmware, software or a combination thereof may be used to perform the various steps and operations described herein. The computing device 900 is suitable for performing the activities described in the above embodiments and may include a server 901. Such a server 901 may include a central processor (CPU) 902 coupled to a random access memory (RAM) 904 and to a read-only memory (ROM) 906. ROM 906 may also be other types of storage media to store programs, such as programmable ROM (PROM), erasable PROM (EPROM), etc. Processor 902 may communicate with other internal and external components through input/output (I/O) circuitry 908 and bussing 910 to provide control signals and the like. Processor 902 carries out a variety of functions as are known in the art, as dictated by software and/or firmware instructions.

Server 901 may also include one or more data storage devices, including hard drives 912, CD-ROM drives 914 and other hardware capable of reading and/or storing information, such as DVD, etc. In one embodiment, software for carrying out the above-discussed steps may be stored and distributed on a CD-ROM or DVD 916, a USB storage device 918 or other form of media capable of portably storing information. These storage media may be inserted into, and read by, devices such as CD-ROM drive 914, disk drive 912, etc. Server 901 may be coupled to a display 920, which may be any type of known display or presentation screen, such as LCD, plasma display, cathode ray tube (CRT), etc. A user input interface 922 is provided, including one or more user interface mechanisms such as a mouse, keyboard, microphone, touchpad, touch screen, voice-recognition system, etc.

The server may be part of a larger network configuration as in a global area network (GAN) such as the Internet 928, which allows ultimate connection to various landline and/or mobile computing devices.

As described above, the apparatus 900 may be embodied by a computing device. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 902 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally, or alternatively, the processor may include one or more processors configured in tandem via the bus to enable independent execution of instructions, pipelining and/or multithreading.

In an example embodiment, the processor 902 may be configured to execute instructions stored in the memory device 904 or otherwise accessible to the processor. Alternatively, or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The system illustrated in FIG. 9 may be configured so that the data storage unit 904/906 stores geological data. The pretrained ML models 404 may be hosted by the processor 902 and are configured to receive the scale-dependent data components 410. A further embodiment could involve integrating the geological interpretation system 900 with other geoscience tools, such as reservoir modelling software, petrophysical analysis tools, or geomechanical simulators. This would allow for seamless interaction between the geological interpretation results and other aspects of subsurface analysis, leading to more accurate and efficient decision-making.

Thus, the present embodiments provide a system 900 and method for geological interpretation of 3D data. By leveraging textual descriptions of geological features and/or small number of labelled data examples, the system can efficiently and accurately estimate rock properties in 3D seismic data, reducing the need for extensive human input and facilitating more objective interpretation results. This novel approach enables geoscientists and other domain experts to better understand subsurface structures and make more informed decisions related to exploration, drilling, and reservoir management. In one application, the geological features include a channel or a fan in the subsurface, and the interpretable input data includes text descriptions of the geological features.

The methods discussed herein may be applied not only to the field of subsurface exploration, for example, hydrocarbon exploration and development, but also for geothermal exploration and development, carbon capture and sequestration, other natural resource exploration and exploitation, and mining. They could also be employed for surveying and monitoring for windfarm applications, both onshore and offshore.

The term "about" is used in this application to mean a variation of up to 20% of the parameter characterized by this term. It will be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combination of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

The disclosed embodiments provide an array of ML models (e.g., pretrained) for determining rock properties from geological data associated with a subsurface. It should be understood that this description is not intended to limit the invention. On the contrary, the embodiments are intended to cover alternatives, modifications, and equivalents, which are included in the spirit and scope of the invention as defined by the appended claims. Further, in the detailed description of the embodiments, numerous specific details are set forth in order to provide a comprehensive understanding of the claimed invention. However, one skilled in the art would understand that various embodiments may be practiced without such specific details.

Although the features and elements of the present embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

The following references are incorporated by reference in this document in their entirety.
Allo F., Coulon J.P., Formento J.L, Reboul R., Capar L., Darnet M., Issautier B., Marc S. and Stopin A., Characterization of a carbonate geothermal reservoir using rock-physics-guided deep neural networks, 2021, The Leading Edge, https://doi.org/10.1190/tle40100751.1.
Colombo D., Turkoglu E., Li W., Sandoval-Curiel E. and Rovetta D., Physics-driven deep-learning inversion with application to transient electromagnetics, 2021, Geophysics, https://doi.org/10.1190/GEO2020-0760.1.
Han J., Lee A. and Russell B., Amplitude Versus Frequency, 2023, Geoconvention expanded abstract.
Jo. H., Cho Y., Pyrcz M., tang H. and Fu P., Machine-learning-based porosity estimation from multifrequency poststack seismic data, 2022, Geophysics, https://doi.org/10.1190/GEO2021-0754.1.
Li P., Liu M., Alfarraj M., Tahmasebi P. and Grana D., Probabilistic physics-informed neural network for seismic petrophysical inversion, 2024, Geophysics, https://doi.org/10.1190/GEO2023-0214.1.
Liu M., Grana D. and Mukerji T., Joint Inversion of geophysical data for geologic carbon sequestration monitoring: a differentiable physics-informed deep learning model, 2022, https://doi.org/10.1002/essoar.10512162.1.
Liu Y. and Ngan K.N., Weighted Adaptive Lifting-Based Wavelet Transform for Image Coding, 2008, IEEE Transactions on image processing.
Ross C., Improving resolution and clarity with neural networks, 2017, SEG Technical Program Expanded Abstracts, https://doi.org/10.1190/segam2017-17359888.1.
Sun J., Innanen K.A. and Huang C., Physics-guided deep learning for seismic inversion with hybrid training and uncertainty analysis, 2021, Geophysics, https://doi.org/10.1190/GEO2020-0312.1.
Sweldens W, The lifting scheme: A custom-design construction of biorthogonal wavelets, 1996, Applied and computational harmonic analysis.
Vashisth D. and Mukerji T., Direct estimation of porosity from seismic data using rock- and wave-physics-informed neural networks, 2022, The Leading Edge, https://doi.org/10.1190/tle41120840.1.

## Claims

1. A method (600) for quantitative subsurface characterization of geological features of a surveyed subsurface, the method comprising:
receiving (602) input data (406) associated with the geological features;
decomposing (604) the input data (406) into plural scale-dependent data components (410), each one being associated with a unique scale, wherein the scale is associated with a frequency content or a spatial resolution;
applying (608) an array (402) of machine learning (ML) models (404) to the plural scale-dependent data components (410) so that each ML model receives as input a set of scale-dependent data components for a specific scale out of the plural scale-dependent data components (410), to generate plural scale-dependent output data (412) at that specific scale;
recomposing (614) the plural scale-dependent output data (412) at the specific scale to obtain target data (414) characteristic of the geological features; and
displaying (616) the geological features based on the target data (414).

2. The method of Claim 1, wherein the input data includes at least one of: seismic data, seismic attributes derived from the seismic data, seismic velocities, gravity data, electromagnetic data, electric data, or magnetic data.

3. The method of Claim 1, wherein the plural scale-dependent data components include k sets of data for each type of data, where k is an integer of at least 2.

4. The method of Claim 3, wherein the step of applying comprises:
associating each ML model of the array with a unique scale; and
applying each ML model to all data components having the same scale to generate an Ith scale-dependent output data set for the corresponding scale,
wherein a first to the Ith scale-dependent output data sets form the plural scale-dependent output data and I is an integer of at least 2.

5. The method of Claim 4, wherein the first scale-dependent output data set at a first scale includes a first target data set at the first scale to an Lth target data set at the first scale, and a kth scale-dependent output data set at the kth scale includes a first target data set at the kth scale to an Lth target data set at the kth scale, where L is an integer of at least 1.

6. The method of Claim 5, wherein the recomposing comprises:
scale recomposing the first target data set at the first scale to the first target data set at the scale k to generate a first target data set; and
scale recomposing the Lth target data set at the kth scale to the Lth target data set at the scale k to generate an Lth target data set,
wherein the target data includes the first target data set to the Lth target data set.

7. The method of Claim 1, wherein the array of ML models includes different types of neural networks and wherein the array of ML models has different parameters for each ML model of the array.

8. The method of Claim 1, wherein the ML models of the array are independent of each other.

9. The method of Claim 1, wherein the ML models are independently trained.

10. The method of Claim 1, wherein the target data includes at least one of: rock composition, rock textural properties, rock type, elastic properties, and geomechanical properties.

11. A computing device (900) for quantitative subsurface characterization of geological features of a surveyed subsurface, the computing device (900) comprising:
an input/output interface (908) for receiving (602) input data (406) associated with the geological features; and
a processor (902) connected to the input/output interface (908) and configured to,
decompose (604) the input data (406) into plural scale-dependent data components (410), each one being associated with a unique scale, wherein the scale is associated with a frequency content or a spatial resolution;
apply (608) an array (402) of machine learning (ML) models (404) to the plural scale-dependent data components (410) so that each ML model receives as input a set of scale-dependent data components for a specific scale out of the plural scale-dependent data components (410), to generate plural scale-dependent output data (412);
recompose (614) the plural scale-dependent output data (412) to obtain target data (414) characteristic of the geological features; and
display (616) the geological features based on the target data (414).

12. The device of Claim 11, wherein the input data includes at least one of: seismic data, seismic attributes derived from the seismic data, seismic velocities, gravity data, electromagnetic data, electric data, or magnetic data.

13. The device of Claim 11, wherein the plural scale-dependent data components include k sets of data for each type of data, where k is an integer of at least 2.

14. The device of Claim 12, wherein the processor is further configured to:
associate each ML model of the array with a unique scale;
apply each ML model to all data sets having the same scale to generate an Ith output data set for the corresponding scale, wherein a first to the Ith output data sets form the plural scale-dependent output data at scale and I is an integer of at least 2,
wherein the first scale-dependent output data set at a first scale includes a first target data set at the first scale to an Lth target data set at the first scale, and a kth scale-dependent output data set at the kth scale includes a first target data set at the kth scale to an Lth target data set at the kth scale, where L is an integer of at least 1;
scale recompose the first target data set at the first scale to the first target data set at the scale k to generate a first target data set; and
scale recompose the Lth target data set at the kth scale to the Lth target data set at the scale k to generate an Lth target data set, wherein the target data includes the first target data set to the Lth target data set.

15. A method (700) for training an array (402) of machine learning (ML) models (404) for quantitative subsurface characterization of geological features of a surveyed subsurface, the method comprising:
receiving (602) input data (406) associated with the geological features;
decomposing (604) the input data (406) into plural scale-dependent data components (410), each one being associated with a unique scale, wherein the scale is associated with a frequency content or a spatial resolution;
applying (608) an array (402) of machine learning (ML) models (404) to the plural scale-dependent data components (410) so that each ML model receives as input a set of scale-dependent data components at a specific scale out of the plural scale-dependent data components (410), to generate plural scale-dependent output data (412);
receiving (702) target data (414) describing the geological features;
scale decomposing (704) the target data (414) into plural scale-dependent target data components (410), each one being associated with a unique scale; and
adjusting (610) one or more features of the ML models based on a minimizing a difference between the plural scale-dependent output data (412) and the plural scale-dependent target data components (410).

## Amended claims

### Amended claims in accordance with Rule 137(2) EPC.

1. A computer-implemented method (600) for quantitative subsurface characterization of geological features of a surveyed subsurface, the method comprising:
receiving (602) input data (406) associated with the geological features, wherein the input data (406) provides indirect measurements of the surveyed subsurface;
decomposing (604) the input data (406) into plural scale-dependent data components (410), each one being associated with a unique scale, wherein the scale is associated with a frequency content or a spatial resolution;
applying (608) an array (402) of machine learning (ML) models (404) to the plural scale-dependent data components (410) so that each ML model receives as input a set of scale-dependent data components for a specific scale out of the plural scale-dependent data components (410), to generate plural scale-dependent output data (412) at that specific scale,
wherein the array of ML models includes different types of neural networks and wherein the array of ML models has different parameters for each ML model of the array;
recomposing (614) the plural scale-dependent output data (412) at the specific scale to obtain target data (414) characteristic of the geological features; and
displaying (616) the geological features based on the target data (414).

2. The method of Claim 1, wherein the input data includes at least one of: seismic data, seismic attributes derived from the seismic data, seismic velocities, gravity data, electromagnetic data, electric data, or magnetic data.

3. The method of Claim 1, wherein the plural scale-dependent data components include k sets of data for each type of data, where k is an integer of at least 2.

4. The method of Claim 3, wherein the step of applying comprises:
associating each ML model of the array with a unique scale; and
applying each ML model to all data components having the same scale to generate an Ith scale-dependent output data set for the corresponding scale,
wherein a first to the Ith scale-dependent output data sets form the plural scale-dependent output data and I is an integer of at least 2.

5. The method of Claim 4, wherein the first scale-dependent output data set at a first scale includes a first target data set at the first scale to an Lth target data set at the first scale, and a kth scale-dependent output data set at the kth scale includes a first target data set at the kth scale to an Lth target data set at the kth scale, where L is an integer of at least 1.

6. The method of Claim 5, wherein the recomposing comprises:
scale recomposing the first target data set at the first scale to the first target data set at the scale k to generate a first target data set; and
scale recomposing the Lth target data set at the kth scale to the Lth target data set at the scale k to generate an Lth target data set,
wherein the target data includes the first target data set to the Lth target data set.

7. The method of Claim 1, wherein the ML models of the array are independent of each other.

8. The method of Claim 1, wherein the ML models are independently trained.

9. The method of Claim 1, wherein the target data includes at least one of: rock composition, rock textural properties, rock type, elastic properties, and geomechanical properties.

10. A computing device (900) for quantitative subsurface characterization of geological features of a surveyed subsurface, the computing device (900) comprising:
an input/output interface (908) for receiving (602) input data (406) associated with the geological features, wherein the input data provides indirect measurements of the surveyed subsurface; and
a processor (902) connected to the input/output interface (908) and configured to,
decompose (604) the input data (406) into plural scale-dependent data components (410), each one being associated with a unique scale, wherein the scale is associated with a frequency content or a spatial resolution;
apply (608) an array (402) of machine learning (ML) models (404) to the plural scale-dependent data components (410) so that each ML model receives as input a set of scale-dependent data components for a specific scale out of the plural scale-dependent data components (410), to generate plural scale-dependent output data (412),
wherein the array of ML models includes different types of neural networks and wherein the array of ML models has different parameters for each ML model of the array;
recompose (614) the plural scale-dependent output data (412) to obtain target data (414) characteristic of the geological features; and
display (616) the geological features based on the target data (414).

11. The device of Claim 10, wherein the input data includes at least one of: seismic data, seismic attributes derived from the seismic data, seismic velocities, gravity data, electromagnetic data, electric data, or magnetic data.

12. The device of Claim 10, wherein the plural scale-dependent data components include k sets of data for each type of data, where k is an integer of at least 2.

13. The device of Claim 11, wherein the processor is further configured to:
associate each ML model of the array with a unique scale;
apply each ML model to all data sets having the same scale to generate an Ith output data set for the corresponding scale, wherein a first to the Ith output data sets form the plural scale-dependent output data at scale and I is an integer of at least 2,
wherein the first scale-dependent output data set at a first scale includes a first target data set at the first scale to an Lth target data set at the first scale, and a kth scale-dependent output data set at the kth scale includes a first target data set at the kth scale to an Lth target data set at the kth scale, where L is an integer of at least 1;
scale recompose the first target data set at the first scale to the first target data set at the scale k to generate a first target data set; and
scale recompose the Lth target data set at the kth scale to the Lth target data set at the scale k to generate an Lth target data set, wherein the target data includes the first target data set to the Lth target data set.

14. A computer-implemented method (700) for training an array (402) of machine learning (ML) models (404) for quantitative subsurface characterization of geological features of a surveyed subsurface, the method comprising:
receiving (602) input data (406) associated with the geological features, wherein the input data (406) provides indirect measurements of the surveyed subsurface;
decomposing (604) the input data (406) into plural scale-dependent data components (410), each one being associated with a unique scale, wherein the scale is associated with a frequency content or a spatial resolution;
applying (608) an array (402) of machine learning (ML) models (404) to the plural scale-dependent data components (410) so that each ML model receives as input a set of scale-dependent data components at a specific scale out of the plural scale-dependent data components (410), to generate plural scale-dependent output data (412),
wherein the array of ML models includes different types of neural networks and wherein the array of ML models has different parameters for each ML model of the array;
receiving (702) target data (414) describing the geological features;
scale decomposing (704) the target data (414) into plural scale-dependent target data components (410), each one being associated with a unique scale; and
adjusting (610) one or more features of the ML models based on a minimizing a difference between the plural scale-dependent output data (412) and the plural scale-dependent target data components (410).
